(19) Europäisches Patentamt
European Patent Office
Office européen des brevets

(11) Veröffentlichungsnummer: **0 129 203**
**B1**

## (12) EUROPÄISCHE PATENTSCHRIFT

(45) Veröffentlichungstag der Patentschrift: **25.07.90**

(21) Anmeldenummer: **84106767.1**

(22) Anmeldetag: **14.06.84**

(51) Int. Cl.⁵: **G 01 N 21/78**, G 01 N 21/86, G 05 D 23/24

(54) **Vorrichtung zum Auswerten eines flachen Testträgers.**

(30) Priorität: **16.06.83 DE 3321783**

(43) Veröffentlichungstag der Anmeldung:
**27.12.84 Patentblatt 84/52**

(45) Bekanntmachung des Hinweises auf die
Patenterteilung:
**25.07.90 Patentblatt 90/30**

(84) Benannte Vertragsstaaten:
**AT BE CH DE FR GB IT LI LU NL SE**

(56) Entgegenhaltungen:
**EP-A-0 009 129**
**US-A-4 038 030**
**US-A-4 059 405**
**US-A-4 303 611**

(73) Patentinhaber: **BOEHRINGER MANNHEIM GMBH**
**Sandhofer Strasse 116**
**D-6800 Mannheim 31 (DE)**

(72) Erfinder: **Fey, Werner, Dipl.-Ing.**
**Seeheimer Strasse 38**
**D-6102 Pfungstadt (DE)**
Erfinder: **Pauli, Manfred**
**Kastanienweg 8**
**D-6830 Schwetzingen (DE)**
Erfinder: **Ruppender, Uwe**
**Ifflandstrasse 7**
**D-6800 Mannheim (DE)**
Erfinder: **Seidenstricker, Manfred**
**Mosbacher Strasse 16**
**D-6800 Mannheim 31 (DE)**

Courier Press, Leamington Spa, England.

## Beschreibung

Die Erfindung bezieht sich auf eine Vorrichtung zum Auswerten eines flachen Testträgers zur analytischen Bestimmung von Bestandteilen von Körperflüssigkeiten mit einer Temperiereinrichtung und einer Regeleinheit, wobei die Temperiereinrichtung eine flächig an den Testträger im Bereich seiner zur Auswertung herangezogenen Bezugsfläche andrückbare Heiz- und Meßeinheit einschließt.

Neben den klassischen Analysemethoden zur quantitativen Bestimmung von Bestandteilen des Bluts oder des Urins, bei denen flüssige Reagenzien verwendet werden, hat in der klinischen Chemie die Verwendung fester Testträger zunehmend an Bedeutung gewonnen. Diese sind häufig als flache Scheiben oder längliche Gebilde nach Art eines schon seit langem insbesondere für qualitative Untersuchungen bekannten Teststreifens ausgebildet. Sie lassen sich besonders einfach auch von wenig geschultem Personal handhaben und mit vergleichsweise einfach aufgebauten und daher kostengünstigen Geräten auswerten.

Ein zentrales Problem bei der Auswertung solcher Testträger ist die Temperierung. Bei den gebräuchlichen enzymatischen Bestimmungen können bereits sehr kleine Temperaturschwankungen die Genauigkeit der Analyse erheblich beeinflussen. Ziel muß es daher sein, die vorbestimmte Analysetemperatur, beispielsweise 37°C mit einer sehr hohen Genauigkeit von etwa 0,1°C einzuhalten.

Prinzipiell läßt sich ein flaches Objekt, wie beispielsweise die angesprochenen Testträger, sehr genau temperieren, wenn man ihn im Bereich seines zur Auswertung herangezogenen Bereiches mit entsprechenden Heizflächen in Kontakt bringt, die mit Heizelementen wie beispielsweise Widerstandsheizdrähten, Meßelementen, wie beispielsweise Thermoelementen und einer zugehörigen Regeleinheit auf eine bestimmte Temperatur gebracht werden. Eine derartige Vorrichtung ist beispielsweise in der US-A-4038030 und in der US-A-4059405 beschrieben.

Eine hinreichend schnelle und damit rationelle Auswertung der Testträger führt jedoch zu hohen und teilweise sich widersprechenden Anforderungen, die mit der vorbekannten Temperiereinheit nicht ausreichend erfüllt werden können. So ist insbesondere ein sehr schnelles Erreichen der Meßtemperatur erstrebenswert. Bei einem experimentell erprobten Ausführungsbeispiel der vorliegenden Erfindung wird beispielsweise die Endtemperatur in etwa 40 Sekunden erreicht. Weiter führt der Fortschritt der Entwicklung entsprechender Testträger dazu, daß mit dem Ziel der Reduzierung der Proben- und Reagenzienmenge immer kleinere Flächen zur Auswertung zur Verfügung stehen. So beträgt die Fläche des Testfeldes eines beispielsweise als Teststreifen ausgeführten Testträgers nur 6mm x 6mm. Hiervon kann aus verschiedenen Gründen nur ein Kreis von etwa 4mm Durchmesser als Bezugsfläche für die Auswertung, die meist als photometrische Bestimmung des diffusen Reflexionsvermögen vorgesehen ist, ausgeführt werden. Schließlich sollen die entsprechenden Auswertegeräte möglichst dezentral in jeder Arztpraxis zur Verfügung stehen können und es ist daher besonders wichtig, daß auch die Einrichtung zum Temperieren kostengünstig aufgebaut ist.

Der Erfindung liegt daher die Aufgabe zugrunde, eine kleine Bezugsfläche eines Testträgers in sehr kurzer Zeit homogen und genau temperieren zu können.

Zur Lösung dieser Aufgabe wird eine Vorrichtung mit den Merkmalen des unabhängigen Anspruches 1 vorgeschlagen.

Der erwähnte in enger Nachbarschaft zu der Heizfläche der Heiz- und Meßeinheit angeordnete Temperaturmeßabschnitt bildet vorzugsweise ein kombiniertes Heiz- und Temperaturmeßelement. Dies ist von erheblichem Vorteil bei der homogenen Temperierung einer sehr kleinen Fläche. Würde man nämlich ein getrenntes Temperaturmeßelement verwenden, und wäre dieses sehr nahe bei der zu temperierenden Fläche angeordnet, wie dies für eine gute Regelung wünschenswert ist, so wäre es nicht möglich, an der gleichen Stelle auch zu heizen. Zwar ließe sich die dadurch erzeugte Inhomogenität dadurch vermeiden, daß eine hinreichend dicke gut wärmeleitende Schicht, beispielsweise aus Kupfer, zum Temperaturausgleich verwendet wird. Eine solche Heiz- und Meßeinheit hätte jedoch eine sehr hohe Wärmekapazität, was wiederum nachteilig für ein schnelles Regelverhalten ist. Außerdem entfallen bei der erfindungsgemäßen Lösung die bei separaten Heiz- und Meßelementen vorhandenen Abstände mit der Folge, daß sehr geringe Regelzeitkonstanten erreicht werden.

Die Verwendung einer Widerstandsstrecke als kombiniertes Heiz- und Meßelement ist aus der EP-A-0 00 91 29 bekannt. Dort wird ein Sensor zur Messung von Blutsauerstoff durch die Haut (transkutan) beschrieben. Es geht dabei darum, einen einfachen Aufbau mit wenigen Zuleitungen zu realisieren. Die Widerstandsstrecke, die auch aus Bahnen auf einem Keramiksubstrat bestehen kann, dient insgesamt zur Temperaturmessung. Eine dicke Anode aus Silber gewährleistet den Temperaturausgleich. Eine schnelle und hochgenaue Temperaturregelung ist mit der bekannten Einrichtung jedoch nicht möglich.

Erfindungsgemäß wird ein flaches Substrat, insbesondere eine Keramikplatte verwendet. Das Substrat hat auf der dem Testträger zugewandten Seite entweder eine glatte Oberfläche, die unmittelbar die mit dem Testträger in Kontakt stehende Heizfläche bildet oder sie ist gemäß einer bevorzugten Ausführungsform der Erfindung vollflächig mit einer Metallplatte verbunden, deren von dem Keramiksubstrat abgewandte Oberfläche ihrerseits die bevorzugt glatt gestaltete Heizfläche bildet.

Auf dem Substrat befinden sich Widerstandsbahnen, die als Heizelement oder Heizelemente verwendet werden und von denen mindestens ein Teil durch entsprechende Ableitungsdrähte angezapft ist und so den Temperaturmeßabschnitt bildet. Besonders bevorzugt sind die Widerstandsbahnen auf eine maximal 2mm, besonders bevorzugt weniger als ein 1mm starke Keramikplatte aufgedampft. Als Metall mit temperaturabhängigem Widerstand eignet sich beispielsweise Platin.

Diese bevorzugte Konstruktion ist besonders kostengünstig herzustellen. Mit Platinschichten bedampfte Keramikplättchen werden als Meßwiderstände serienmäßig hergestellt. Sie enthalten sehr dicht beieinander angeordnete homogen verteilte Widerstandsbahnen, beispielsweise in Form eines Meandermusters. Es ist auch kein Problem, derartige Platinbahnen mit entsprechenden Drähten an verschiedenen Stellen zu kontaktieren oder auch die Bahnen zu unterbrechen, so daß bestimmte Teile individuell durch Stromdurchgang beheizt oder zur Meßung herangezogen werden können.

Durch die geringe Dicke des Keramiksubstrats ergibt sich eine enge thermische Kopplung zwischen den Widerstandsbahnen und der mit dem Testträger in Kontakt stehenden Heizfläche. Außerdem führt die geringe Masse zu sehr kleinen Verzögerungen im Regelverhalten und damit zu einer schnellen Thermostatisierung. Trotz der geringen Wärmekapazität wird wegen der gleichmäßigen und durch keinen separaten Meßfühler unterbrochenen Beheizung eine hervorragende Homogenität auch bei der Temperierung extrem kleiner Flächen erreicht.

Die erwähnte Verbundbauweise, bei der das die Widerstandsbahnen tragende Substrat mit einer Metallfläche vollflächig verbunden ist, verbindet die erwähnten Vorteile des Keramiksubstrats mit den Vorteilen einer die Kontaktfläche tragenden Metallplatte, nämlich einem zusätzlichen Wärmeausgleich und den produktionstechnischen Vorteilen metallener im Vergleich zu keramischen Bauteilen.

Um eine möglichst geringe Wärmeableitung von den Widerstandsbahnen nach hinten, also von dem sie tragenden Substrat weg, zu erreichen, ist die Heiz- und Meßeinheit so konstruiert, daß hinter dem Substrat ein die Widerstandsbahnen umschließender Hohlraum vorhanden ist, der thermisch isolierend wirkt.

In einer besonders bevorzugten Ausführungsform sind mindestens zwei Temperaturmeßabschnitte in unmittelbarer Nachbarschaft der Heizfläche vorhanden. Diese sind zusammen mit zwei Referenzwiderständen in eine Meßbrücke geschaltet. Jeweils ein Meßwiderstand liegt an einem Eingang der Meßbrücke an. Die Meßbrücke wird entweder mit einer Konstantspannung oder gemäß besonders bevorzugter Ausführungsform mit der von der Regeleinheit gesteuerten Speisespannung zur Erzeugung der elektrischen Heizleistung beaufschlagt. Die Referenzwiderstände haben bevorzugt einen konstanten Widerstandswert, der dem Widerstandswert des zugeordneten kombinierten Heiz- und Meßwiderstands bei der gewünschten Isttemperatur (beispielsweise 37°C) entspricht. Die Spannung an der Brückendiagonale, die ein Maß für den Temperatur-Istwert darstellt, geht in diesem Fall unabhängig von der Speisespannung der Brücke bei Erreichen der Solltemperatur durch Null. Dadurch ist es möglich, daß die kombinierten Heiz- und Meßelemente gleichzeitig mit einer Gleichspannung beheizt und zur Temperaturmessung verwendet werden. Außerdem ist der schaltungstechnische Aufwand sehr gering. Es sind jedoch auch andere Schaltungen möglich, bei denen die kombinierten Heiz- und Meßwiderstände alternierend zur Temperaturmessung und zu Heizen verwendet werden. Dies kann insbesondere bei Verwendung einer digitalen Elektronik zur Regelung sinnvoll sein.

In einer wesentlichen Ausführungsform ist dem Testträger nach dem Einführen und/oder Auflegen kurzzeitig eine erhöhte Heizleistung zuführbar. Ein schnelles Aufheizen des Testträgers auf die geforderte Temperatur wird erreicht, wobei die jeweils zugeführte Heizleistung den jeweiligen Anforderungen und Randbedingungen entsprechend vorgebbar ist. Die erhöhte Heizleistung wird erfindungsgemäß in Abhängigkeit von der beim Auflegen des Testtägers auf die Heiz- und Meßeinheit abgeführten Energie vorgenommen. Hierzu wird die von der Heiz- und Meßeinheit an den Testträger abgegebene Energie aufintegriert und ein entsprechendes Korrektursignal wird dem Temperatur-Sollwert aufgeschaltet, welcher dem Regler zugeführt wird.

Um die erläuterte Sollwertkorrektur mit einem geringen schaltungstechnischen Aufwand durchführen zu können, wird nach dem Aufintegrieren ein Integrationskondensator entladen, wobei eine Zeitkonstante vorgegeben ist. Ein entsprechendes Entladungssignal wird dann dem Regler zur Korrektur zugeführt. Ein schnelles Aufheizen des Testträgers wird gewährleistet. Die Steuerung des Integrators und auch der Entladung erfolgt mit Hilfe eines Prozessors.

Um den Einfluß der Umgebungstemperatur bzw. der Geräteinnentemperatur auf das Meßergebnis möglichst klein zu halten, ist in einer bevorzugten Ausgestaltung eine Meßeinrichtung für die Geräteinnentemperatur vorgesehen, um einen entsprechenden Korrekturwert dem Regler zuzuführen. Wie oben bereits angegeben, ist zwischen dem Meßort, an welchem das oder die Meßelelemente angeordnet sind, und dem Testort im Testfeld auch bei der erfindungsgemäßen Konstruktion ein unvermeidlicher Abstand vorhanden. Da von dem Testfeld an die kühlere Umgebung ständig Wärme abfließt (im Falle eines Teststreifens vor allem durch den aus Kunststoff bestehenden Basisstreifen), besteht zwischen Testort und Meßort eine Temperaturdifferenz, welche von der Umgebungstemperatur abhängig ist. Mit der Meßeinrichtung wird ein Korrekturwert erzeugt, der auf den Regler wirkt. Diese Meßeinrichtung enthält zweckmäßig ebenfalls eine Meßbrücke mit einem Meßwiderstand, wobei dieser Meßwiderstand an geeigneter Stelle angeordnet ist. Wird die Diagonalspannung der Meßbrücke einem Differenzverstärker im Gerät zugeführt, so wird das Verstärkerausgangssignal auch unmittelbar von der Geräteinnentemperatur beeinflußt.

Zur beidseitigen Beheizung eines auf seiner Oberseite ein Testfeld tragenden flachen Testträgers weist die erfindungsgemäße Vorrichtung bevorzugt zwei Heiz- und Meßeinrichtungen auf, von denen je eine von den beiden Seiten her gegen den Testträger angedrückt werden kann. Die dem Testfeld zugeordnete Heiz- und Meßeinrichtung hat dabei bevorzugt eine Durchtrittsöffnung, durch welche Licht für eine reflexionsphotometrische Messung auf das Testfeld fallen kann.

Zu beiden Seiten dieser Öffnung ist jeweils das Heiz- und Meßelement vorgesehen, wobei erfindungsgemäß der oben bereits erwähnte parallel geschaltete zusätzliche Heizwiderstand auf dem gleichen Keramiksubstrat angeordnet sein kann. Aufgrund dieser unmittelbaren Beheizung des Testfeldes wird eine besonders zuverlässige und exakte Temperierung des Testfeldes erreicht.

In einer weiteren wesentlichen Ausgestaltung ist die am Testträger auf der vom Testfeld abgewandten Seite anliegende Heiz- und Meßeinrichtung (im folgenden untere Heiz- und Meßeinrichtung) auf einem bewegbaren Aufnahmeschlitten für den Testträger angeordnet, wobei bereits während der Bewegung des Aufnahmeschlittens in die Meßposition Heizleistung zwecks Vorerwärmung des Testträgers zuführbar ist. Bereits beim Einlaufen in die Meßposition hat der Testträger dadurch näherungsweise die erforderliche Temperatur erreicht, so daß die Reaktion praktisch immer bei den gleichen Temperaturbedingungen stattfinden kann.

In einer besonderen Weiterentwicklung erfolgt mittels der unteren Heiz- und Meßeinrichtung eine Vorerwärmung derart, daß im Testfeld, insbesondere in dem zur Auswertung herangezogenen Bezugsfeld, nach einer vorwählbaren Zeit nur noch eine vorgegebene kleine Temperaturdifferenz zum Sollwert vorhanden ist. Nachfolgend wird beim Anliegen der oberen Heiz- und Meßeinheit an das Testfeld die erwähnte kleine Temperaturdifferenz ausgeglichen. Es muß hierbei nur noch eine vergleichsweise geringe Energie dem Testfeld zugeführt werden, so daß auch die Gefahr eines Überschwingens der Temperatur in überraschend zuverlässiger Weise vermieden werden kann. Es sei hervorgehoben, daß insbesondere bei als Teststreifen ausgebildeten Testträgern in der Regel die Oberfläche des Testfeldes mit der zu untersuchenden Probe auf definierte Temperatur gebracht und gehalten werden muß. Die Vorerwärmung erfolgt von unten durch den Testträger sowie die unteren Bereiche des Testfeldes hindurch und es kann insoweit von einer Pufferwirkung ausgegangen werden, die in der Praxis eine unzulässige Überschreitung der Sollwert-Temperatur verhindert. Die obere Heizplatte weist hingegen einen relativ geringen Abstand zu dem "Testort", also der Oberfläche des Testträgers mit der Probe auf; da nur noch eine geringe Temperaturdifferenz zu überwinden ist, kann mittels der oberen Heizplatte der Temperatur-Sollwert sehr schnell und exakt angefahren werden.

Weitere erfindungswesentliche Merkmale und Vorteile ergeben sich aus den nachfolgend anhand der Zeichnungen näher erläuterten Ausführungsbeispielen. Es zeigen:

Fig. 1 eine schematische Schnittdarstellung einer erfindungsgemäßen Temperiereinrichtung

Fig. 2 schematisch einen Schnitt entlang der Linie II-II gemäß Fig 1.

Fig. 3 ein Blockschaltbild eines Regelkreises mit der Regeleinheit und in Meßbrücken angeordneten Heiz- und Meßwiderständen.

Fig. 4 Meßkurven des zeitlichen Verlaufs der Heizleistung sowie der Temperatur im Meßfeld.

Fig. 5 und 6 eine Ausführungsform einer an der Meßeinheit angeordneten oberen Heiz- und Meßeinrichtung in einem Längsschnitt und in einer Aufsicht.

Fig. 7 eine schematische Darstellung einer Anordnung mit einem Aufnahmeschlitten für einen Teststreifen.

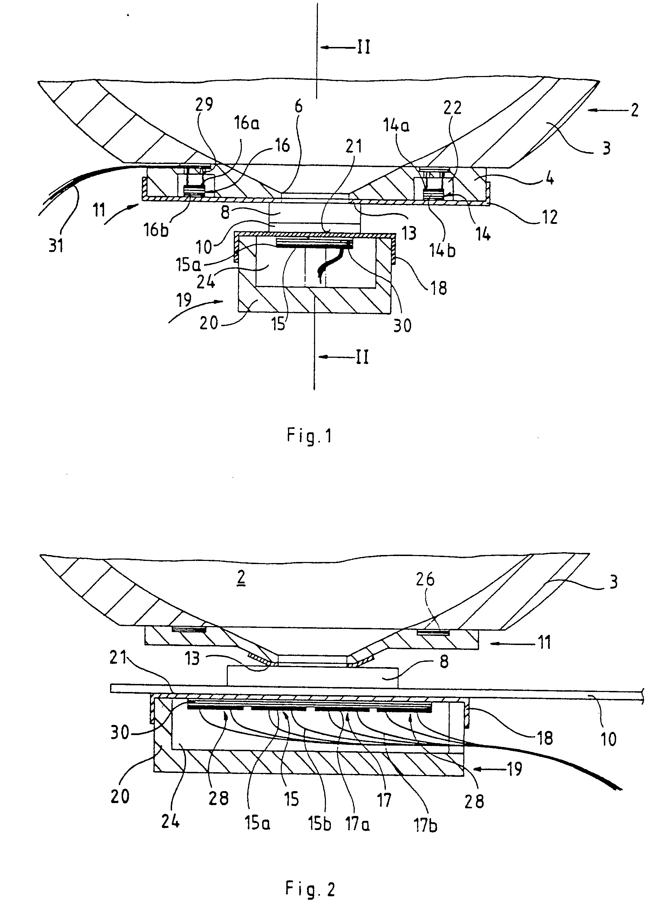

In Fig. 1 ist schematisch der untere Teil einer Meßeinheit 2 zu erkennen, wobei diese Meßeinheit als eine hinlänglich bekannte Ulbricht'sche Kugel 3 ausgebildet ist. Einzelheiten einer beispielsweise geeigneten Konstruktion sind in der EU-A-75766 beschrieben. Die Meßeinheit 2 enthält eine Meßblende 4 mit einer Öffnung 6 durch welche Licht aus dem Innern der Meßeinheit auf ein Testfeld 8 eines als Teststreifen 10 ausgebildeten Testträgers gelangen kann. Das vom Testfeld 8 reflektierte Licht wird durch geeignete Mittel der Meßeinheit 2 erfasst und in geeigneter Weise ausgewertet. Der Meßblende 4 ist eine insgesamt mit dem Bezugszeichen 11 bezeichnete Heiz- und Meßeinheit zugeordnet. Diese umfasst zwei kombinierte Heiz- und Meßelemente 14 und 16 und eine Metallplatte 12. Die Heiz- und Meßelemente 14, 16 bestehen jeweils aus einem Keramikplättchen 14b, 16b, auf dem durch Aufdampfen Widerstandsbahnen 14a, 16a aufgebracht sind. Die Widerstandsbahnen sind in der Zeichnung in stark übertriebener Schichtdicke dargestellt. Bei einer ihrer tatsächlichen Schichtdicke entsprechenden Darstellung wären sie in Zeichnung nicht zu erkennen.

Die Meßblende 4 besteht in der dargestellten Ausführungsform aus einem thermisch isolierenden Kunststoffmaterial, auf dem nur eine dünne Metallplatte 12 sitzt. In vorteilhafter Weise können diese beiden Bauteile aber auch einstückig aus Metall hergestellt sein. Dies vereinfacht die Herstellung und verbessert die Wärmeverteilung in der dann erheblich dickeren Metallplatte. Dadurch wird deren Heizfläche 13 besser temperiert.

Die der Meßblende 4 zugeordnete Heiz- und Meßeinheit 11 ist bei der dargestellten bevorzugten Ausführungsform oberhalb des Teststreifens angeordnet und wird deswegen im folgenden als obere Heiz- und Meßeinheit bezeichnet.

Von der vom Testfeld 8 des Teststreifens 10 abgewandten Seite her drückt eine zweite Heiz-

und Meßeinheit 19, die im folgenden als untere Heiz- und Meßeinheit bezeichnet wird, mit ihrer Heizfläche 21 gegen die Rückseite des Teststreifens 10. Die Heizfläche 21 ist ein Teil der Oberfläche einer Metallplatte 18, die auf einem Träger 20 aus Kunststoff befestigt ist. Die Metallplatte 18 trägt kombinierte Heiz- und Meßelemente 15 und 17, die, ähnlich wie zuvor für die obere Heiz- und Meßeinheit 11 beschrieben, Widerstandsbahnen 15a und 17a haben die in diesem Fall auf einem gemeinsamen Keramikplättchen 30 aufgedampft sind. Ableitdrähte 15b, 17b dienen dem elektrischen Anschluß der Heiz- und Meßelemente 15, 17.

Die Keramikplättchen 14b, 16b und 30 sind auf den jeweiligen Metallplatten 12 bzw. 18 bevorzugt mit Hilfe eines Wärmeleitklebers aufgeklebt, der geeignet sein muß, die durch die unterschiedlichen Ausdehnungskoeffizienten von Metall und Keramik verursachten Spannungen auszugleichen.

Fig. 2 zeigt einen Schnitt entlang der Schnittlinie II-II gemäß Fig. 1. Der Teststreifen 10 ist in seiner Längserstreckung zu erkennen. Die untere Metallplatte 18 weist in Längsrichtung des Teststreifens 10 eine Länge auf, die nicht unerheblich größer, mindestens etwa 1,5 mal so groß, ist, wie die Länge des Testfeldes 8, so, daß auch die unmittelbare Umgebung des Testfeldes 8 hinreichend erwärmt werden kann. Auch quer zur Zeichenebene ist aus den gleichen Gründen die Metallplatte 18 breiter ausgebildet als der Teststreifen 10 bzw. das Testfeld 8. Bei der dargestellten Ausführungsform ist in der Zeichenebene der Fig. 1 das Keramikplättchen 30 aus produktionstechnischen Gründen etwas schmaler als der Teststreifen 10 und dessen Testfeld 8. Dies ist unschädlich, weil die zur Messung herangezogene Bezugsfläche, für die die optimale Temperierung erreicht werden muß, kleinere Abmessungen hat, als das Testfeld in seiner Gesamtheit und weil auch die Metallplatte 18 für einen gewissen Temperaturausgleich sorgt. Außerdem macht sich die die Temperierung störende Wärmeabfuhr an die Umgebung in Längsrichtung des Teststreifens stärker bemerkbar, so daß die reichliche Dimensionierung der Heizfläche in der in Fig. 2 dargestellten Längsrichtung besonders wichtig ist.

Man erkennt, daß bei der unteren Heiz- und Meßeinrichtung 19 die Widerstandsbahnen 15a, 17a der kombinierten Heiz- und Meßelemente 15, 17 nur durch die bevorzugt etwa 0,6mm dicke Platte aus $Al_2O_3$-Keramik und die ähnlich dünne Metallplatte 18 von der Rückseite des Teststreifens getrennt sind. Andererseits bedecken die Widerstandsbahnen nahezu die gesamte Fläche der Keramikplatte, bevorzugt mindestens 90%, in gleichmäßiger Dichte. Gleichmäßige Dichte bedeutet hierbei nicht notwendigerweise eine gleichmäßige Verteilung der Widerstandsbahnen auf der Fläche. Entscheidend ist nur, daß die Leistungsdichte der in Wärme umgewandelten elektrischen Leistung auf der gesamten genutzten Fläche nahezu homogen ist. Dadurch wird die Rückseite des Teststreifens im Bereich der zur Auswertung herangezogenen Bezugsfläche einerseits gleichmäßig und homogen beheizt, andererseits ist eine sehr enge Kopplung zwischen dem Heiz- und Meßelement und dem Testfeld gewährleistet. Dabei ist wichtig, daß die homogene Beheizung ohne große, dem Temperaturausgleich dienenden Massen erreicht wird, was ein schnelles Regelverhalten ermöglicht. Bei der dargestellten Konstruktion der unteren Heiz- und Meßeinheit 19 werden die Vorteile der Erfindung im vollen Umfang genutzt.

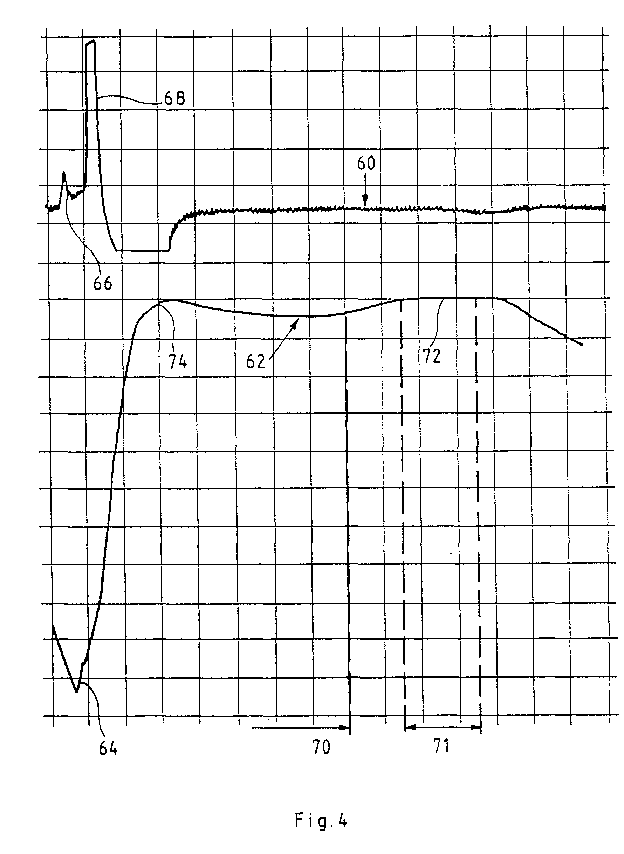

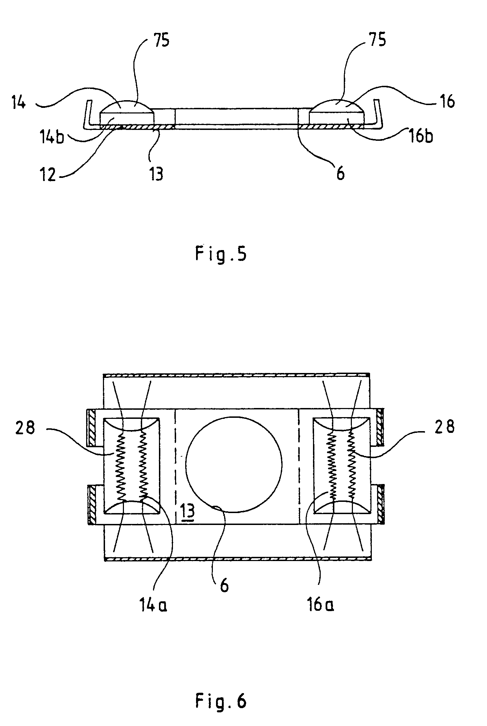

Bei der dargestellten Ausführungsform der oberen Heiz- und Meßeinheit 11 ist es aus optischen und produktionstechnischen Gründen nicht möglich, eine ebenso enge Nachbarschaft der Meßelemente 14,16 zu dem Testfeld 8 zu realisieren. Um eine optisch ideale Form der Ulbricht'schen Kugel 3 zu realisieren muß vielmehr die Blende 4 in der dargestellten Weise flach ausgebildet sein. Außerdem erlaubt die Öffnung 6 nur eine verhältnismäßig kleine Heizfläche, auf der die Metallplatte 12 mit der Oberfläche des Testträgers 8 in Kontakt steht. Aus produktionstechnischen Gründen haben die Heiz- und Meßelemente 14,16 auch nur relativ kleine Flächen (vgl. Fig. 5 und 6). Diese Abweichungen von der idealen Bauweise sind bei der oberen Heiz- und Meßeinheit 11 akzeptabel, weil, wie im folgenden anhand von Fig. 4 noch näher beschrieben, diese nur zum Ausgleich einer relativ kleinen Temperaturdifferenz benötigt wird. Auch hier erweist sich jedoch die erfindungsgemäße Konstruktion als vorteilhaft, weil die kompakte und flache Bauweise der Heiz- und Meßelemente 14, 16 eine entsprechend flache Bauweise der Meßblende 4 und damit eine ideale Gestaltung der Ulbricht'schen Kugel erlaubt.

Da die obere Heiz- und Meßeinheit 11 eine relativ große Kontaktfläche zu der Ulbricht'schen Kugel 3 aufweist, ist zum Ausgleich der Wärmeableitung ein Folienheizelement 26 der Meßblende 4 zugeordnet. Das Folienheizelement ist auf der einen Seite seiner Trägerfolie mit einem geeigeneten Heizleitermaterial, insbesondere Manganin, beschichtet und dient insoweit als Heizelement. Die andere Oberfläche trägt Kupferbahnen, die die erforderlichen elektrischen Anschlußleiterbahnen für die Heiz- und Meßelemente 14, 16 und für die Manganinschicht bilden. Drähte 29 verbinden die Heiz- und Meßelemente 14, 16 mit den Kupferbahnen des Folienheizelements und diese mit der Regeleinheit.

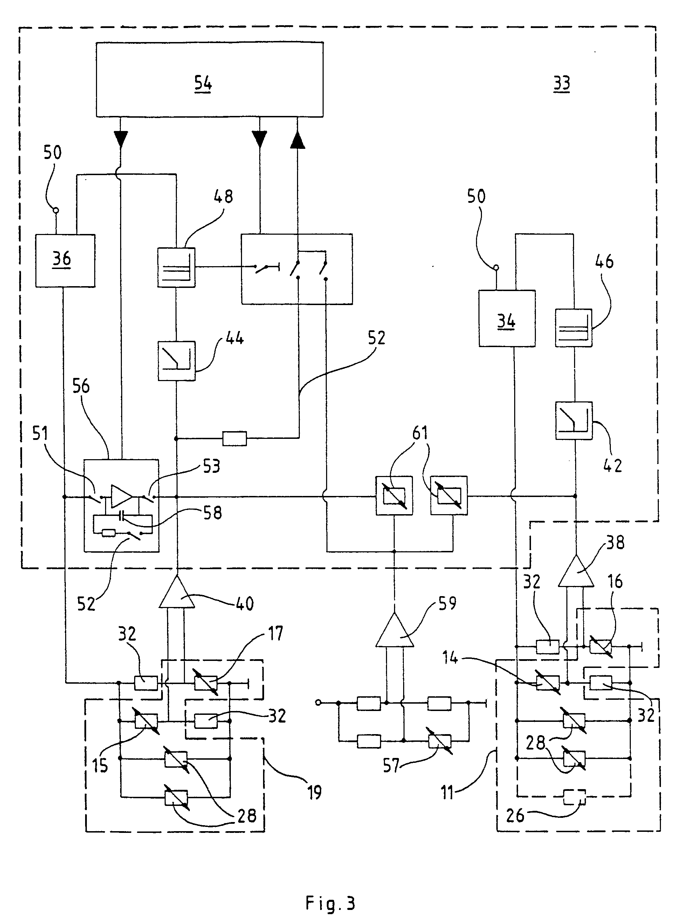

Fig. 3 zeigt ein Blockschaltbild der Schaltungsordnung, wobei rechts die Heiz- und Meßelemente 14,16 der oberen Heiz- und Meßeinheit 11 und links die entsprechenden Elemente 15, 17 der unteren Heiz- und Meßeinheit 19 zu erkennen sind. Die Regeleinheit ist insgesamt mit 33 bezeichnet. Die genannten Heiz- und Meßelemente sind mit Referenzwiderständen 32 zu Meßbrücken geschaltet, welche an je einer Leistungsstufe 34, 36 anliegen. Den jeweiligen Brücken sind Heizwiderstände 28 zwecks Erhöhung der Heizleistung parallel geschaltet, die ebenfalls als Widerstandsbahnen auf den Keramikplatten 14b, 16b, 30 in der bereits erläuterten Weise angeordnet sind. Die parallel geschalteten Heizwiderstände 28 könnten grundsätzlich entfallen oder aber sie könnten auch nach Bedarf mit geeigneten Schaltelementen von der Brücke abgetrennt oder wieder parallel geschaltet werden. Bei der oberen Heizplatte 12 ist ferner das Folienheizelement 26 parallel geschaltet. Die Diagonalspannung der Meßbrücken entspricht den Temperatur-Istwerten und über Differenzverstärker 38, 40 wird ein entsprechendes Signal einem PI-Regler 42,44 und einem nachgestalteten D-Regler 46,48 zugeführt. Über die genannten Regler werden die Leistungsstufen 34,36 angesteuert. Die Differenzverstärker 38,40 dienen zur Vorverstärkung des Temperatur-Istwertes, wobei hier chopperstabilisierte Operationsverstärker vorgesehen sind. Die Widerstände für den Verstärkungsfaktorabgleich befinden sich gemeinsam mit den Referenzwiderständen 32 zur guten Wärmekopplung in einem Gehäuse. Ein derartiger Verstärker weist einen sehr geringen Offset, Temperaturkoeffizienten und Gleichtakt auf. Am Ausgang der Verstärker 38, 40 steht eine Spannung an, die proportional zur Heizplattentemperatur ist. Bevorzugt ist der Widerstandswert der Referenzwiderstände so groß wie der des jeweils am gleichen Brückeneingang liegenden Heiz- und Meßelements 14 bzw. 16 bei 37°C. Dann geht die Ausgangsspannung des Verstärkers bei 37°C durch 0.

Wie aus dem Blockschaltbild zu erkennen ist, sind die Regler (PI, D) zweistufig aufgebaut, wodurch eine bessere Entkopplung der Parameter erreicht wird. Die jeweiligen Parameter sind speziell auf die Eigenschaften der oberen bzw. unteren Heizplatte 12, 18 abgestimmt, um eine schnelle und verzögerungsfreie Reaktion, insbesondere beim Auflegen eines Teststreifens, zu erhalten. Die Leistungstufen 34, 36 enthalten einen integrierten Spannungsregler, welcher eine gute Unterdrückung von Schwankungen der Speisespannung an den Klemmen 50 gewährleistet. In diesen Regler ist eine zusätzliche Überlastbegrenzung integriert. In einer besonderen Ausführungsform ist die Ausgangsspannung der Leistungstufen 34, 36 in einem Bereich von 0,6 bis 13 Volt vorgebbar; noch kleinere Spannungswerte werden vermieden, damit der Regler nicht in den Bereich der Instabilität gerät. Die Leistungstufe 36 kann ggfs. vom Regler getrennt werden, wobei dann die Meßbrücke definiert mit einer konstanten Spannung von 0,6 Volt gespeist wird. Die Schaltung dient nunmehr als Temperaturmeßverstärker, wobei der Temperatur-Istwert über eine Leitung einem Prozessor zuführbar ist.

In dem Schaltungsteil für die untere Heizplatte 18 ist eine Korrektureinheit 56 vorgesehen, mit welcher die beim Auflegen eines Teststreifens an denselben abgeführte Energie aufintegriert wird. Die Einheit 56 enthält einen Integrator, welcher von dem Prozessor 54 mit Hilfe der Schalter S1, S2, S3 auf Kondensatorentladung umschaltbar ist. Der Prozessor 54 erzeugt zweckmäßig beim Starten eines für den Teststreifen vorgesehenen Aufnahmeschlittens und/oder beim Schließen einer Aufnahmeöffnung, durch welche der Teststreifen in das Gerät bzw. auf den Aufnahmeschlitten oder dergl. gelegt wird, ein Signal durch das die Integration gestartet wird. Hierzu wird der Schalter S1 geschlossen, während die Schalter S2 und S3 geöffnet sind. Die Integration wird für eine feste vorgegebene Zeit durchgeführt und nach dieser Zeit wird der Kondensator auf ein Signal des Prozessors 54 hin entladen, indem der Schalter S1 geöffnet und die Schalter S2 und S3 geschlossen werden. Der Integrationskondensator 58 der Korrektureinheit 56 verliert mit entsprechender Zeitkonstante seine Ladung, wobei dieses Entladungssignal den Reglern 44, 48 als Korrektursignal zugeführt wird. Dadurch daß das Temperatursignal am Eingang des PI-Reglers 44 während der Kondensatorentladung in Sinne einer scheinbaren Erniedrigung der Temperatur beeinflußt wird, wird nach dem Auflegen eines Teststreifens die den Heizelementen zugeführte Energie in entsprechender Weise sehr stark vergrößert, wodurch ein schnelles Aufheizen des Teststreifens erreicht wird. Mittels des Prozessors 54 wird der erläuterte Funktionsablauf gesteuert. Die Geräteinnentemperatur wird mit einer Meßeinrichtung enthaltend eine Brücke mit einem Meßwiderstand 57 und einen Verstärker 59 erfaßt und über Potentiometer den Reglern und/oder dem Prozessor 54 zugeführt.

In Fig. 4 zeigt die Kurve 60 den Verlauf der Heizleistung für die untere Heiz- und Meßeinheit 19. Die Kurve 62 stellt den Temperaturverlauf im Testfeld eines in die Anordnung eingelegten Teststreifens dar. Die Temperatur sinkt zu Beginn des Kurvenverlaufs, weil ein Tropfen Probe aufgegeben wurde. Beim Auflegen eines Teststreifens auf die untere Heizplatte beginnt die Temperatur im Testfeld zu steigen (bei 64). Die Energieabfuhr an den in der Regel kühleren Teststreifen führt zu einem Ansteigen der Heizenergie durch Nachregeln des zugeordneten Reglers entsprechend Spitze 66 für die zugeführte Heizleistung. Die oben erläuterte Korrektureinheit 56 erfaßt die Spitze 66 durch Integration während einer festen Zeit. Nach dieser Zeit wird der Integrationskondensator entladen und es erfolgt eine gesteuerte Erhöhung der Heizleistung, die um so stärker ist, je niedriger die Temperatur des Teststreifens zu Beginn des Heizvorgangs war. Diese Erhöhung ist in der Kurve 60 durch den Abschnitt 68 zu erkennen. Durch diese bevorzugte Ausgestaltung wird sicher gestellt, daß der kühle Teststreifen sehr schnell aufgeheizt wird, ohne daß es zu einem wesentlichen Überschwingen der Temperatur (bei 74) kommt. Die Dimensionierung der Korrektureinheit 56 wird empirisch festgelegt.

Bis zu dem Zeitpunkt 70 wird der Teststreifen ausschließlich von der unteren Heizplatte vorgeheizt. Zu diesem Zeitpunkt wird auch die obere Heizplatte der Meßeinheit am Testfeld angedrückt und folglich tritt eine gewisse Erhöhung des Temperatur-Istwertes ein, wobei innerhalb kürzester Zeit der geforderte Sollwert 72 erreicht und auch gehalten wird. Die Messung wird kurz nach dem Zeitpunkt 70 bei praktisch konstantem Temperaturverlauf in dem Intervall 71 durchgeführt. Danach sinkt die Temperatur nach Abheben der Meßeinheit mit der oberen Heizplatte wieder ab. Aufgrund des bis zum Zeitpunkt 70 erfolgten Vorheizens muß der Teststreifen nach dem Andrücken der Meßeinheit nur noch geringfügig erwärmt werden, was innerhalb kürzester Zeit erfolgen kann. Bevorzugt erfolgt das Vorheizen beim Bewegen des Teststreifens auf einem Aufnahmeschlitten an die Meßeinheit.

Fig. 5 und 6 zeigen einen Schnitt bzw. eine Aufsicht durch eine Ausführungsform der oberen Heiz- und Meßeinheit 11. Die Metallplatte 12 weist in der Mitte die Öffnung 6 auf, zu deren beiden Seiten die beiden kombinierten Heiz- und Meßelemente 14, 16 angeordnet sind. Sie sind in der Aufsicht nach Fig. 6 vereinfacht als einfache Zacken dargestellt. Tatsächlich verlaufen die aufgedampften Widerstandsbahnen 14a, 16a in an sich bekannter Weise bevorzugt meanderförmig über die Fläche des Substrats 14b, 16b. Auf dem gleichen Keramiksubstrat 14b, 16b befindet sich jeweils auch ein Heizelement 28, welches gemäß Fig. 3 parallel zu der Meßbrücke mit den Elementen 14, 16 geschaltet ist. Die Heiz- und Meßelemente 14, 16 und ebenso das Heizelement 28 sind an die Heizplatten 12 bevorzugt mittels eines Silberleitklebers angeklebt oder in geeigneter Weise angelötet. Man erkennt in Fig. 6 auch die Heizfläche 13, die wegen der großen Öffnung 6 nur auf einer verhältnismäßig kleinen Fläche das Meßfeld 8 des Teststreifens 10 (Fig. 1 und 2) kontaktieren kann. In Fig. 5 ist eine Glasversiegelung 75 der Heiz- und Meßelemente 14,16 zu erkennen.

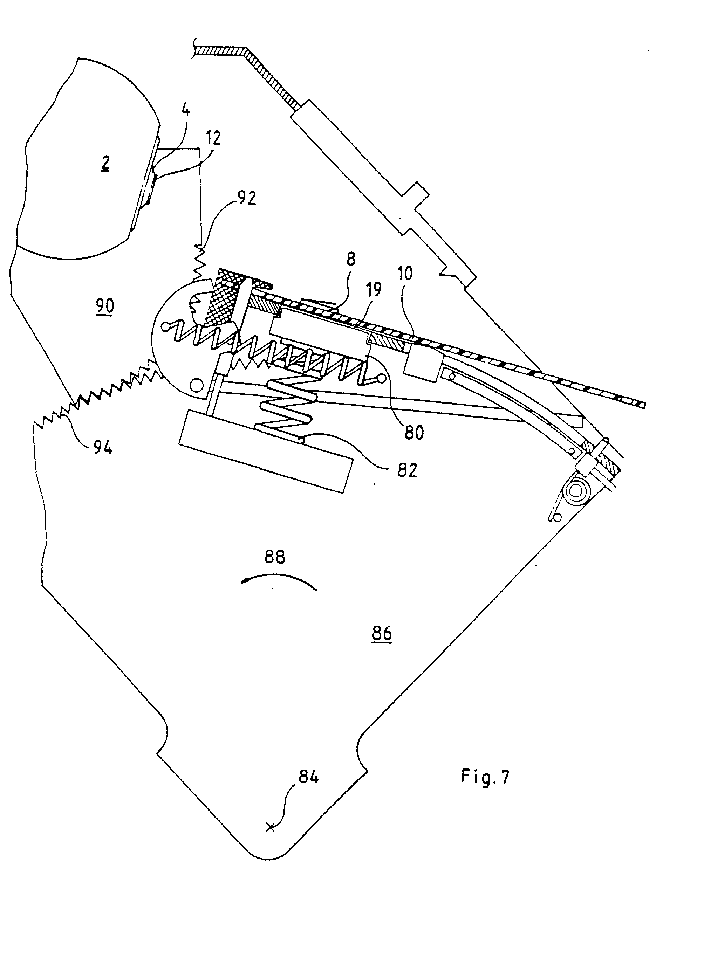

In Fig. 7 ist schematisch eine Anordnung dargestellt, bei welcher die untere Heiz- und Meßeinheit 19 auf eine Andruckplatte 80 angeordnet ist. Die Andruckplatte 80 ist von einer Feder 82 beaufschlagt und sie befindet sich auf einem um eine Achse 84 schwenkbaren Aufnahmeschlitten 86. Der Teststreifen 10 ist auf den Aufnahmeschlitten 86 in hier nicht weiter zu erläuternden Weise aufspannbar, wobei das Testfeld 8 mittels der Heizplatte 18 in der oben erläuterten Weise beheizbar ist. Von entscheidender Bedeutung ist hier, daß die Vorheizung des Testfeldes 8 bereits während des Schwenkens des Aufnahmeschlittens 86 in Richtung des Pfeiles 88 in die Meßposition erfolgt. Die Meßeinheit 2 ist auf einem ebenfalls schwenkbaren Schlitten 90 mit einem Zahnkranz 92 angeordnet, der mit einem Zahnkranz 94 des Aufnahmschlittens 86 in Eingriff steht. In der Meßposition liegt die Meßblende 4 mit der oberen Heizplatte 12 auf dem Testfeld 8 auf. Einzelheiten sind der deutschen Patentanmeldung P3321785.8 (DE-A-3321785) zu entnehmen.

**Patentansprüche**

1. Vorrichtung zum Auswerten eines flachen Testträgers (10) zur analytischen Bestimmung von Bestandteilen von Körperflüssigkeiten mit einer Temperiereinrichtung und einer Regeleinheit (33), wobei die Temperiereinrichtung eine flächig an den Testträger (10) im Bereich seiner zur Auswertung herangezogenen Bezugsfläche mit einer Heizfläche (21) andrückbare Heiz- und Meßeinheit (19) einschließt, dadurch gekennzeichnet, daß die Heiz- und Meßeinheit (19) in enger Nachbarschaft zu der Heizfläche (21) ein flaches dünnes Substrat (30) aufweist, auf welchem als Heizleiter Widerstandsbahnen (15a, 17a, 28) aus einem Metall mit einem temperaturabhängigen Widerstand dicht beieinander angeordnet und so dimensioniert und verteilt sind, daß sich eine gleichmäßige Verteilung der elektrischen Leistungsdichte auf der Fläche ergibt, und ein Teil (15a) der Widerstandsbahnen als Temperaturmeßabschnitt (15) mit Ableitdrähten (15b) angezapft ist und der elektrische Widerstand des Temperaturmeßabschnitts zur Regelung der Temperatur der Heiz- und Meßeinheit (19) durch die Regeleinheit (33) verwendet wird.

2. Vorrichtung nach Anspruch 1, dadurch gekennzeichnet, daß das Substrat (30) eine Keramikplatte von maximal 2mm Stärke ist.

3. Vorrichtung nach einem der vorhergehenden Ansprüche, dadurch gekennzeichnet, daß die Heizfläche (21) ein Teil der Oberfläche einer Metallplatte (18) ist, mit der die der Heizfläche zugewandte Seite der Keramikplatte (30) vollflächig verbunden ist.

4. Vorrichtung nach einem der vorhergehenden Ansprüche, dadurch gekennzeichnet, daß zwischen dem Substrat und den benachbarten Bauteilen ein die Widerstandsbahnen (15a, 17a) umschließender Hohlraum (24) zur thermischen Isolation vorhanden ist.

5. Vorrichtung nach einem vorhergehenden Ansprüche, dadurch gekennzeichnet, daß mindestens zwei Temperaturmeßabschnitte (15a, 17a) vorgesehen sind, die als Temperaturmeßelemente (15, 17) mit zwei Referenzwiderständen (32) so in eine Meßbrücke geschaltet sind, daß die Spannung der Brückendiagonale dem Temperatur-Istwert entspricht.

6. Vorrichtung nach einem der vorhergehenden Ansprüche, dadurch gekennzeichnet, daß die Regeleinheit (33) eine Schaltung (56) einschließt, durch die nach dem Auflegen des Testträgers (10) kurzzeitig eine erhöhte Heizleistung zuführbar ist.

7. Vorrichtung nach einem der vorhergehenden Ansprüche, dadurch gekennzeichnet, daß die Regeleinheit eine Meßeinrichtung (57, 59) für die Temperatur der Umgebung und/oder des Innenraumes der Vorrichtung einschließt, um ein dieser Temperatur entsprechendes Korrektursignal der Regeleinheit (33) zuzuführen.

8. Vorrichtung nach einem der vorhergehenden Ansprüche, dadurch gekennzeichnet, daß die Temperiereinrichtung zwei Heiz- und Meßeinrichtungen (11, 19) einschließt, von denen je eine von der ein Testfeld (8) tragende Oberseite und von der Unterseite her gegen den Testträger (10) angedrückt werden kann, wobei die der Oberseite zugeordnete Heiz- und Meßeinrichtung (11) an einer optischen Meßeinheit (2) angeordnet ist und eine Durchtrittsöffnung (6) für Licht aufweist und wobei auf gegenüberliegenden Seiten dieser Öffnung (6) jeweils ein kombiniertes Heiz- und Meßelement (14, 16) angeordnet ist.

9. Vorrichtung nach Anspruch 8, dadurch gekennzeichnet, daß die der Unterseite des Testträgers zugeordnete Heiz- und Meßeinrichtung (19) auf einem von einer Aufnahmeposition in eine Meßposition bewegbaren Aufnahmeschlitten (86) für den Testträger (10) angeordnet ist, daß bereits während der Bewegung des Aufnahmeschlittens (86) in die Meßposition Heizleistung zwecks Vorerwärmung des Teststreifens (10) zuführbar ist, so daß nur noch eine vorgegebene kleine Temperaturdifferenz zum Temperatur-Sollwert vorhanden ist und daß in der Meßposition das Testfeld (8) des Testträgers (10) an die obere Heiz- und Meßeinrichtung (11) angedrückt wird, wobei die kleine Temperaturdifferenz ausgeglichen wird.

**Revendications**

1. Dispositif pour évaluer un support de test (10) plat pour la détermination analytique de composants de fluides corporels, avec un dispositif d'équilibrage thermique et un ensemble de régulation (33), le dispositif d'équilibrage thermique comprenant un ensemble de chauffage et de mesure (19), qui peut s'appuyer avec une surface chauffante (21), à plat sur le support de test (10), dans la zone de sa surface de référence utilisée pour l'évaluation, caractérisé en ce que l'ensemble de chauffage et de mesure (19) présente, en relation étroitement adjacente avec la surface chauffante (21), un substrat (30) mince et plat, sur lequel sont disposés de façon serrées entre eux, comme conducteurs thermiques, des éléments de résistance (15a, 17a, 28) en un métal ayant une résistance dépendant de la température, et que ces éléments de résistance sont dimensionnés et distribués de telle façon que l'on obtienne une répartition uniforme de la densité de puissance électrique à la surface, et une partie (15a) des éléments de resistance est munie, en tant que segment de mesure (15) de la température, de fils métalliques de dérivation (15b), et la résistance électrique du segment de mesure de température est utilisée pour la régulation de la température de l'ensemble de chauffage et de mesure (19), par l'intermédiaire de l'ensemble de régulation (33).

2. Dispositif selon la revendication 1, caractérisé en ce que le substrat (30) est une plaque de céramique ayant une épaisseur maximale de 2 mm.

3. Dispositif selon l'une quelconque des revendications précédentes, caractérisé en ce que la surface chauffante (21) est une partie de la surface d'une plaque métallique (18) à laquelle la face de la plaque de céramique (30), qui est tournée vers la surface chauffante, est liée sur la totalité de sa surface.

4. Dispositif selon l'une quelconque des revendications précédentes, caractérisé en ce qu'entre le substrat et les composants voisins, il existe un espace vide (24), servant à l'isolation thermique, entourant les éléments de résistance (15a, 17a).

5. Dispositif selon l'une quelconque des revendications précédentes, caractérisé en ce qu'il est prévu au moins deux segments de mesure de température (15a, 17a), qui sont montés, comme éléments de mesure de température (15, 17), pour former un pont de mesure avec deux résistances de référence (32), de façon que la tension aux bornes de la diagonale du pont corresponde à la valeur réelle de la température.

6. Dispositif selon l'une quelconque des revendications précédentes, caractérisé en ce que l'ensemble de régulation (33) comprend un circuit (56) à travers lequel il est possible de faire passer, après la mise en place du support de test (10), pendant une courte de durée, une puissance chauffante élevée.

7. Dispositif selon l'une quelconque des revendications précédentes, caractérisé en ce que l'ensemble de régulation comprend un dispositif de mesure (57, 59) pour la température de l'environnement et/ou de l'intérieur du dispositif, afin d'amener dans l'ensemble de régulation (33) un signal de correction correspondant à la température du dispositif.

8. Dispositif selon l'une quelconque des revendications précédentes, caractérisé en ce que le dispositif d'équilibrage thermique comprend deux dispositifs de chauffage et de mesure (11, 19) dont chacun peut être pressé contre le support de test (10) par sa face supérieure portant le panneau de test (8) et pas sa face inférieure, le dispositif de chauffage et de mesure (11) associé à la face supérieure étant disposé sur une unité de mesure optique (2) et présentant un trou passant (6) pour la lumière, un dispositif de chauffage et de mesure (14, 16) étant prévu sur chacune des faces opposées à ce trou (6).

9. Dispositif selon la revendication 8, caractérisé en ce que le dispositif de chauffage et de mesure (19), associé à la face inférieure du support de test, est disposé sur un charriot récepteur (86) du support de test (10), déplaçable dans une position de mesure à partir d'une position de réception, que déjà pendant le déplacement du charriot récepteur (86) dans la position de mesure, une puissance de chauffage peut être amenée pour le préchauffage des bandes de test (10), de sorte qu'il n'existe plus qu'une faible différence de température prédéterminée pour la valeur de consigne de la température, et que dans la position de mesure du panneau de test (8), le support de test (10) est pressé contre le dispositif de chauffage et de mesure supérieur (11), la faible différence de température étant ainsi équilibrée.

**Claims**

1. Device for the evaluation of a flat test carrier (10) for the analytical determination of components of body fluids, with a tempering device and a regulating unit (33), whereby the tempering device includes a heating and measurement unit (19) with a heating surface (21), which can be pressed flatly against the test carrier (10) in the region of its reference surface utilised for the evaluation, characterised in that the heating and measurement unit (19) has, in close proximity to the heating surface (21), a flat, thin substrate (30) on which, as heat conductor, are arranged closely together resistance strips (15a, 17a, 28) of a metal with a temperature-dependent resistance and are so dimensioned and distributed that there is given a uniform distribution of the electrical power density and a part (15a) of the resistance strips is tapped as temperature measurement section (15) with lead-off wires (15b) and the electrical resistance of the temperature measurement section is used for the regulation of the temperature of the heating and measurement unit (19) by the regulating unit (33).

2. Device according to claim 1, characterised in that the substrate (30) is a ceramic plate of maximum 2mm. thickness.

3. Device according to one of the preceding claims, characterised in that the heating surface (21) is a part of the surface of a metal plate (18) with which the side of the ceramic plate (30) facing the heating surface is full-facedly connected.

4. Device according to one of the preceding claims, characterised in that, between the substrate and neighbouring constructional parts, there is present a hollow chamber (24) enclosing the resistance strips (15a, 17a) for thermal insulation.

5. Device according to one of the preceding claims, characterised in that at least two temperature measurement sections (15a, 17a) are provided which are so connected as temperature measurement elements (15, 17) with two reference resistances (32) in a measurement bridge that the voltage of the bridge diagonals corresponds to the actual temperature value.

6. Device according to one of the preceding claims, characterised in that the regulating unit (33) includes a circuit (56) by means of which, after the laying on of the test carrier, an increased heating capacity can be applied for a short time.

7. Device according to one of the preceding claims, characterised in that the regulating unit includes a measurement device (57, 59) for the temperature of the surroundings and/or of the inner space of the device in order to introduce a correction signal to the regulating unit corresponding to this temperature.

8. Device according to one of the preceding claims, characterised in that the tempering device includes two heating and measurement devices (11, 19), one of which can be pressed on from the upper side carrying a test field (8) and the other from the lower side against the test carrier (10), whereby the heating and measurement device (11) associated with the upper side is arranged on an optical measurement unit (2) and has a through-opening (6) for light and whereby on the opposite-lying sides of this opening (6) is, in each case, arranged a combined heating and measurement element (14, 16).

9. Device according to claim 8, characterised in that the heating and measurement device (19) associated with the lower side of the test carrier is arranged on a reception slider (86) for the test carrier movable from a reception position into a measurement position, that already during the movement of the reception slider (86) into the measurement position heating capacity can be introduced for the purpose of preheating of the test strip (10) so that there is present only a predetermined small temperature difference from the desired temperature value and that, in the measurement position, the test field (8) of the test carrier (10) is pressed on the upper heating and measurement device (11), whereby the small temperature difference is equalised.

Fig.1

Fig.2

Fig.3

Fig.4

Fig.5

Fig.6

Fig.7